# EUROPEAN PATENT APPLICATION

(11) **EP 4 598 276 A1**
(43) Date of publication of application: **06.08.2025**
(21) Application number: 25152320.5
(22) Date of filing: 16.01.2025
(51) Int. Cl.: H05B 45/3725, H05B 45/345, H02M 1/00, H02M 3/156

(54) **CONVERTER DEVICE AND CORRESPONDING METHOD**

(30) Priority: 01.02.2024 IT 202400002103
(71) Applicant: Inventronics GmbH, 85748 Garching b. München (DE)
(72) Inventor: LUCCATO, Daniele, I-31052 Varago di Maserada (Treviso) (IT)
(74) Representative: Buzzi, Notaro & Antonielli d'Oulx S.p.A.

(57) **Abstract**

A converter device (10), such as a buck converter, that can be used for driving LED lighting sources (L) comprises: an input node configured to receive an input signal (Vinput) and an output node (OUT) configured to have an electrical load (L) coupled thereto; an inductance (Lb, RLb) between the output node (OUT) and a driver node (N); and an electronic switch (S1) between the input node (Vinput) and the driver node (N), wherein the driver node (N) is electrically coupled to the input node (Vinput) in response to the electronic switch (S1) being conductive, with a current-recirculation diode (D) configured to facilitate the flow of current between ground (GND) and the driver node (N).

Current-detection circuitry (Ra, Ca, Cb, Rb) is provided, comprising the series connection of a first resistor (Ra) coupled to the driver node (N) and a first capacitor (Ca) coupled to the output node (OUT), a second capacitor (Cb) having a first end coupled between the first resistor (Ra) and the first capacitor (Ca) and a second end coupled to a current-detection node (P), with a second resistor (Rb) between the current-detection node (P) and ground (GND). Zeroing circuitry (S2) is likewise provided between the current-detection node (P) and ground (GND), the zeroing circuitry (S2) being configured to force the current-detection node (P) to ground in response to the electronic switch (S1) being nonconductive.

## Description

### Technical field

The present disclosure relates to converter devices.

One or more embodiments may find use, for example, in lighting systems comprising LED lighting sources.

### Description of the prior art

In lighting systems comprising LED lighting sources it is desirable to have available multichannel output functions, i.e., to be able to supply (drive) different LED modules with one and the same driver instead of having a number of drivers.

Considering, for example, the sector of road and street lighting, it may be advantageous to light the lane or lanes dedicated to vehicle traffic with an intensity different from the parts dedicated to pedestrians. A multichannel driver facilitates these management modes.

For this purpose, in the prior art various solutions have been proposed, which, however, present some drawbacks, such as complexity, cost, or low performance.

The market shows, in fact, that it appreciates inexpensive and small-sized drivers, suitable for use with small-sized apparatuses, albeit retaining a good level of performance, for example, as regards the dimming function.

A way to meet the above requirements is to provide a platform equipped with three stages, namely, a power-factor correction stage (PFC), an isolated DC/DC conversion stage, and a stage, again with two or more buck converters, for regulating the current in each channel.

The topologies for PFC and DC/DC conversion are quite well-known and consolidated. The converter topology adopted to regulate the current in each channel may hence make the difference, for example, as regards the possibility of carrying out a control with high current precision, a low output ripple and a wide voltage-operation range (or window), for example, with the capacity of controlling a load with voltages higher than 100 V.

It has been noted that, in such a possible context of use, the detection of the peak-current signal plays a role of importance for the purposes of control.

In the prior art, various ways for controlling a converter such as a buck converter with a control of the peak current have already been proposed. A buck converter is a converter of a switching type that can be used as step-down converter (voltage reducer). The circuit usually comprises two switches (a transistor and a diode), an inductor, and a capacitor.

For instance, it is possible to detect the peak current with a current transformer: this solution presents, however, the drawback that the current transformer is rather big and costly.

Control of the peak current can also be derived from the inductor (or inductance or coil) of the buck converter, with a control capable of managing signals close to the output voltage.

For instance, it is possible to compare a signal derived from an RC circuit in parallel to the coil to obtain a buck control with hysteresis. It has been noted that this solution functions if the feedback voltage is close to the output voltage, i.e., if the corresponding comparator is supplied with a voltage referenced to the output voltage, or if the output voltage is rather low.

The signal on the coil can be detected in various ways, always on the condition that the control is referenced to the output or that the output voltage does not reach high values: in this regard, reference may be made, for example, to the document US 2015/364995 A1.

The document US 7 358 710 B2 describes a control implemented directly with the signal coming from the inductance and compensated in temperature.

The document US 2010 033145 A1 envisages a resistance (denoted by R5) connected to ground. The idea is once again that of having a feedback on the current through the inductor or coil of the converter in combination with a feedback-voltage component Vo. If the component Vo is high, to have an adequate value that can be used for a regulator referenced to ground, the resistance R5 must have a low value as compared to the other resistances of the circuit. Having a low value for the resistance R5 considerably reduces the contribution of the current-feedback component. This means that this circuit is not suitable for controls referenced to ground and high voltages Vo.

Documents US 2019/229620 A1 and document US 2017/085178 A1 plus (essentially as background art) documents US 2015/364995 A1, EP 2 546 966 A2, and US 2021/028685 A1 are further exemplary of the prior art.

### Object and summary

The object of one or more embodiments is to contribute to overcoming the drawbacks outlined previously.

According to one or more embodiments, the above object is achieved thanks to a device having the characteristics recalled in the ensuing claims.

One or more embodiments regard a corresponding method.

The solutions proposed herein implement an improved control strategy for a converter.

Advantageously, in addition to the case exemplified herein of a buck converter with output referenced to ground, solutions like those proposed herein lend themselves to being used in similar topologies, whether isolated or not, such as forward converters, bridge or half-bridge converters, etc.

The solutions proposed herein afford one or more of the following advantages:
low switching losses since switching occurs in quasi resonant mode;
high control bandwidth thanks to the modalities adopted for control of the peak current;
general control rendered simple;
high precision thanks to the current directly read on the load (LED); and
output referenced to ground.

### Brief description of the annexed drawings

One or more embodiments will now be described, purely by way of non-limiting example, with reference to the annexed drawings, wherein:
Figure 1 is a circuit diagram exemplifying a converter device like the one described herein;
Figures 2, 3, and 4 are timing charts exemplifying possible waveforms of signals within a device like the one described herein; and
Figure 5 is a circuit diagram exemplifying a possible variant embodiment of a converter device like the one described herein.

It will be appreciated that, except where the context indicates otherwise, parts or elements that are similar are designated in the various figures by the same references.

Consequently, for reasons of brevity and simplicity of illustration, a detailed description of such parts or elements will not be repeated for each figure.

Once again, for reasons of brevity and simplicity of illustration, in the present description one and the same reference may possibly be used to denote both a certain node or line and a signal present on that node or line.

### Detailed description

In the ensuing description, various specific details are illustrated in order to enable an in-depth understanding of various examples of embodiments according to the disclosure. The embodiments may be obtained without one or more of the specific details, or with other methods, components, materials, etc. In other cases, known structures, materials, or operations are not illustrated or described in detail so that the salient aspects of the embodiments will not be obscured.

Reference to "an embodiment" or "one embodiment" in the framework of the present description is intended to indicate that a particular configuration, structure, or characteristic described in relation to the embodiment is comprised in at least one embodiment. Phrases such as "in an embodiment" or "in one embodiment" that may be present in various points of the present description do not necessarily refer exactly to one and the same embodiment. Moreover, particular conformations, structures, or characteristics may be combined in any adequate way in one or more embodiments.

The references used herein are provided merely for convenience and hence do not define the sphere of protection or the scope of the embodiments.

Again, the fact of presenting a certain element/component as "connected" or "coupled" to another element is to be understood both as indication of the fact that between them there can be set another element/component and as indication of the fact that the element/component can be connected or coupled directly to another element/component. When, instead, an element/component is said to be "directly connected" or "directly coupled" to another element/component, it is to be understood that between them there is not set yet a further element/component.

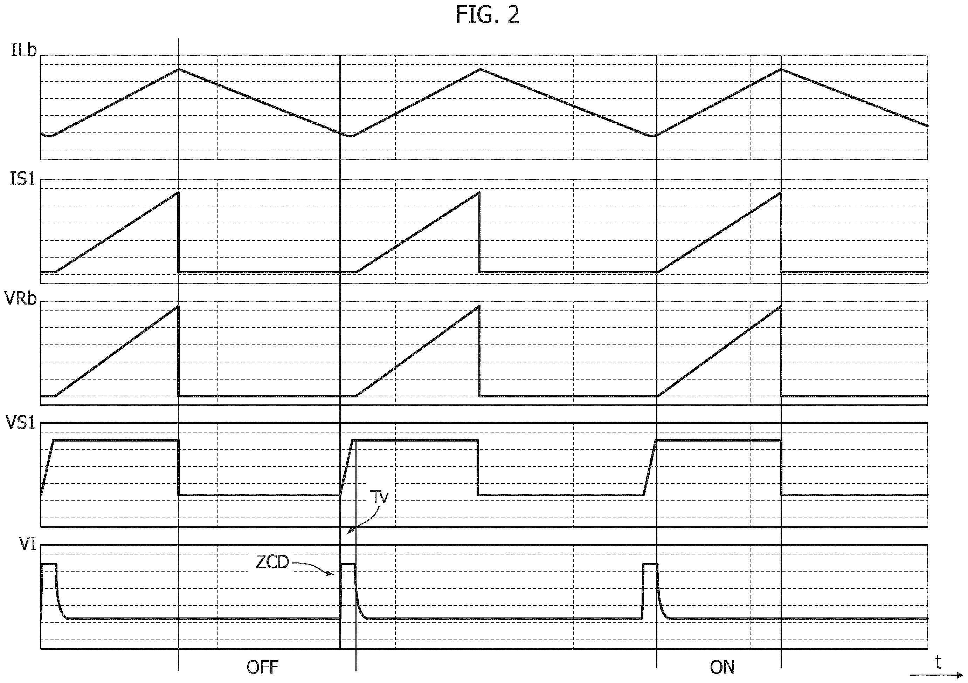

It will be noted again that the charts of Figures 2, 3, and 4 exemplify possible waveforms of signals within a device like the one described herein, without any binding reference to specific quantitative values.

As has been said in the introductory part of the present description, the purpose of the solutions like the ones described herein is to obtain control of the peak current for a converter (for example, a buck converter) in which the output can reach quite high levels (for example, higher than 10-20 V) with a control referenced to ground.

Moreover, the control scheme exemplified herein can be optimized for a critical conduction mode (CCM) or for a discontinuous conduction mode (DCM).

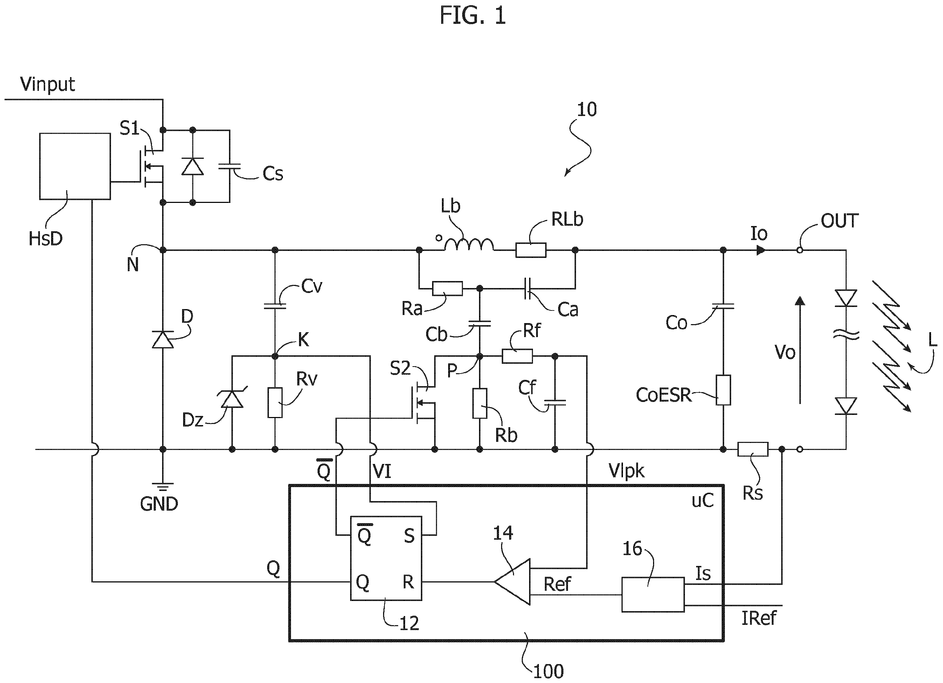

Illustrated in Figure 1 is an example of converter device, designated as a whole by 10, comprising an electronic switch S1 (for example, a MOSFET) set with its current path (between source and drain, in the case of a field-effect transistor, such as a MOSFET) between an input node or line at a voltage Vinput and a node N.

A driver HsD (functioning as high-side driver) acts - in a way in itself known - on the control terminal (the gate, in the case of a field-effect transistor, such as a MOSFET) of the switch S1. Of this switch (MOSFET) there are also represented the body diode and the capacitance Cs.

A diode D (functioning as freewheeling buck diode) is connected (with its cathode) to the node N, hence to the switch S1, and (with its anode) to ground GND.

Set between the node N and ground GND is an end-of-current detection circuit (for detecting the end of the current in the inductor or coil Lb of the converter), which comprises a capacitor Cv connected on one side to the node/line N and on the other side to a node K coming under which is the parallel connection of a Zener diode Dz and a resistor Rv; on the side opposite to the capacitor Cv, i.e., on the side opposite to the node K, the parallel connection of the diode Dz and the resistor Rv is connected to ground GND.

In Figure 1, the reference S2 denotes a low-signal switch (for example, once again a MOSFET), the control terminal of which (the gate, in the case of a field-effect transistor, such as a MOSFET) is driven by the output neg(Q) of a flip-flop 12 that receives on its set input S a signal VI present on the node K.

The current path (between source and drain, in the case of a field-effect transistor, such as a MOSFET) through the switch S2 is connected between ground GND and a node P comprised in a network configured to transfer to ground the signal indicative of the current that flows through the buck inductance or coil Lb, associated to which is a resistance Lrb, with the inductance Lb and the resistance Lrb represented connected together in series between the node N and an output node, designated by OUT, of the converter circuit.

To the node OUT there is to be connected a load, here represented in the form of a string of LEDs L that are configured to function as lighting sources.

It will be appreciated that the load is not usually comprised in the embodiments since it is to be connected to the converter device (only) during mounting/installation so that it can be supplied with a current Io at a voltage Vo.

As illustrated herein, the network configured to transfer to ground the signal indicative of the current that flows through the buck inductance or coil Lb comprises:
a resistor Ra and a capacitor Ca arranged in series with respect to one another and connected in parallel to the buck inductance or coil Lb (and to the corresponding resistance Lrb);
a capacitor Cb connected between the node P and the intermediate node (which for simplicity is not denoted by any reference) between the resistor Ra and the capacitor Ca; and
a resistor Rb connected between the node P and ground GND.

As illustrated herein, also connected between the node P and ground GND is a lowpass filter RC comprising a resistor Rf connected to the node P and a capacitor Cf set between the resistor Rf and ground GND, with the intermediate node (which for simplicity is not denoted by any reference) between the resistor Rf and the capacitor Cf connected to an input of a comparator 14 so as to supply to the comparator a signal VIpk that is to be compared with a reference threshold Ref supplied by a PI (proportional-integral) controller (of a type in itself known) 16 with the output signal of the comparator 14 applied to the reset input R of the flip-flop 12, the output Q of which is sent to the driver HsD.

Even though they are represented as separate elements for simplicity of exposition, the components 12, 14 and 16 can be implemented as part of a single control unit (for example, a microcontroller) 100 configured to:
via the flip-flop 12, receive the signal VI from the node K and send the signal neg(Q) to the switch S2 and the signal Q to the driver HsD;
via the comparator 14, receive the signal VIpk from the output of the filter Rf, Cf connected to the node P and apply the result of the comparison with the threshold Ref to the input R of the flip-flop 12; and
via the PI controller 16, generate the threshold Ref as a function of a current reference IRef (obtained in a way in itself known) and of a current value Is derived from the load L, for example, across a shunt resistor Rs connected between ground GND and the terminal of the load L opposite to the node OUT.

Likewise represented in Figure 1 is an output capacitance Co represented with its equivalent series resistance (ESR) CoESR: this value, also referred to as internal resistance, represents the loss of useful energy that occurs with respect to an ideal (perfect) capacitor.

As illustrated herein, the series connection of the output capacitance Co and the equivalent series resistance CoESR can be viewed as being set between the output node OUT and the grounded terminal of the shunt resistor Rs, i.e., the terminal of the shunt resistor Rs opposite to the load L.

The converter circuit of Figure 1 has the switch S1 (MOSFET) floating and is driven by the high-side driver HsD in such a way that the ground is in common with the control.

Figure 2 presents, with reference to one and the same temporal co-ordinate t on the abscissa, possible waveforms of the following signals (from the top down):
the current ILb in the inductor (coil) Lb
the current IS1 through the switch S1
the voltage VRb across the resistor Rb (node P)
the voltage VS1 on the node N
the "downstream" voltage VI (set input of the flip-flop 12).

In the two charts further down in Figure 2 there is highlighted the possibility of performing a zero-current-detection (ZCD) function in a "downstream" interval Tv.

As already mentioned, the converter 10 exemplified herein functions in critical conduction mode (CCM) so that the current ILb in the coil always goes to zero before restart of the next period.

In the periodic switching operation there may, in particular, be distinguished two intervals, "ON" and "OFF", in which the switch S1 is, respectively, conductive (on) and non-conductive (off).

Directing first attention to the "ON" interval, when the switch S1 is on (i.e., conductive) the current IS1 starts to increase, and the circuit formed by the components identified as Ra, Ca, Rf, Cf, and S2 provides the corresponding information on the current referenced to ground.

These components can be viewed as forming two different circuits that function in two different ways.

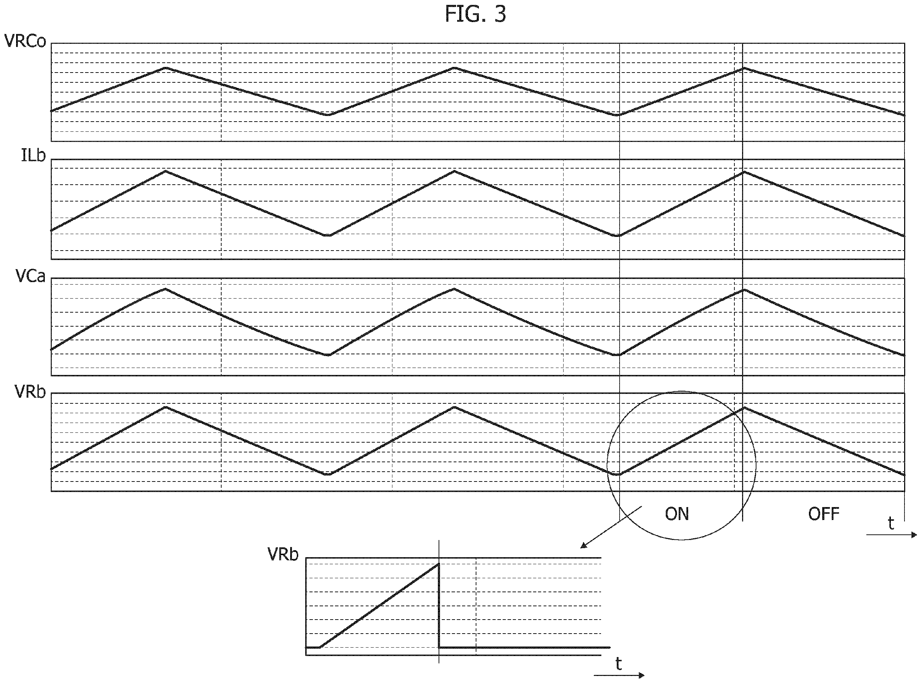

In this regard, reference may be made to Figure 3, which represents, with reference to one and the same temporal co-ordinate t on the abscissa, possible waveforms that would be obtained - in the absence of the switch S2 - of the following signals (from the top down):
the ripple voltage VRCo on the capacitor Co
the current ILb through the inductor (coil) Lb
the voltage VCa on the capacitor Ca
the voltage VRb on the resistor Rb.

The portion of graph reproduced at the bottom in Figure 3 highlights, instead, how the presence of the switch S2 makes it possible to cause the voltage VRb on the resistor Rb to have a ramp-like variable value that starts from zero.

It may be noted that the network comprising the resistor Ra and the capacitor Ca is in parallel to the inductor (coil) Lb and the signal across the capacitor Ca is proportional to the current ILb and that the network comprising the resistor Rb and the capacitor Cb sends the signal to ground.

If we start to consider the resistor Ra and the capacitor Ca, we note that, by adequately sizing the aforesaid components (for example, in such a way as to have Ra×Ca = Lb/RLb - it is recalled that, as used herein, these symbols refer both to the component and to the corresponding characteristic electrical parameter: resistance, capacitance, or inductance), the signal across the capacitor Ca presents the same behaviour as the current ILb so that it starts at zero when the "ON" time starts and reaches a value proportional thereto, so that the peak voltage on the capacitor Ca is equal to the product of the peak value of the current ILb and the value of resistance of the resistor RLb.

Given that the circuit comprising the resistor Rb and the capacitor Cb is connected both to the capacitor Ca and to the capacitor Co, the resistor Rb has across it not only the signal across the capacitor Ca but also the ripple across the capacitor Co given by the resistance CoESR (at the top in Figure 3). The ripple has a mean value equal to zero but oscillates between positive values and negative values.

The sum of the signal across the capacitor Ca and the signal derived from the capacitor Co is in any case linked to the current in the coil Lb but with an AC component that renders the total signal (at the bottom in Figure 3) not altogether similar to the current ILb in the inductor Lb with the peak value almost equal to VCa/2 + VRco.

The switch S2 makes it possible to render the ripple (always) positive. The switch S2 (for example a MOSFET) is on (rendered conductive) when the switch S1 is off (i.e., non-conductive) and causes the signal to be kept at zero during the off time of the switch S1. In this way, when switching-on of the switch S1 is started (switch S1 on, i.e., conductive), the signal can be correlated to the current of the MOSFET (signal VRb in Figure 2).

This is equivalent, so to speak, to considering, for the signal VRb of Figure 3 only the portion of the operating cycle ("ON") where S1 is on, i.e., conductive, whereas, during the time ("OFF") in which S1 is off, i.e., non-conductive, the signal VRb is kept at 0 by the switch S2.

It may be noted that the value of resistance CoESR can be rather high so that the signal VRb across the resistor Rb may derive mainly from the ripple on the capacitor Co; this is not altogether positive because this parameter depends upon the service life of the capacitor Co.

To reduce the dependence upon the value of the capacitor Co, it is possible to choose the values of resistance Ra and capacitance Ca in such a way as to have Ra×Ca < Lb/Rb.

By so doing, if we consider, for example, having Ra×Ca three times lower than Lb/Rb (i.e., 3×(Ra×Ca) = Lb/Rb) achievement of a proportionality with the actual current is facilitated.

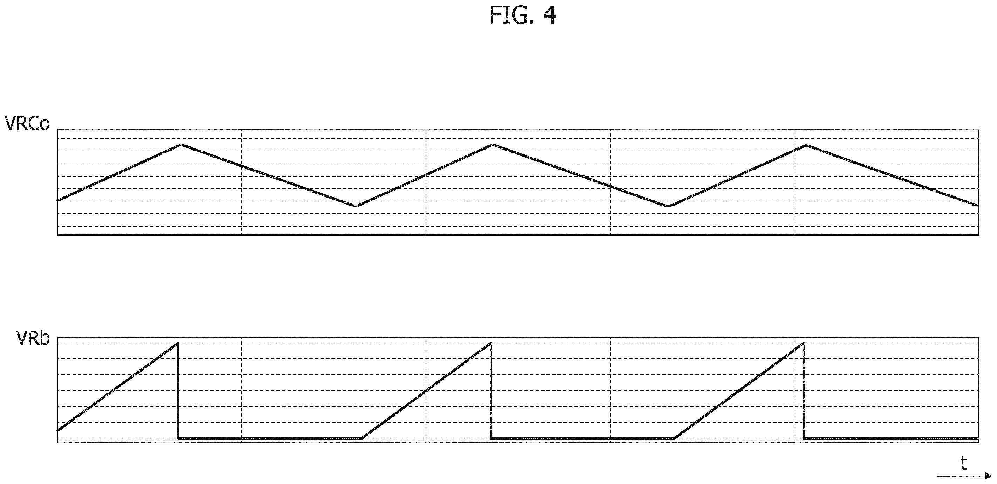

As may be inferred from Figure 4, which (once again with reference to one and the same temporal co-ordinate t on the abscissa) illustrates possible waveforms
of the ripple voltage VRCo on the capacitor Co (above) and
of the voltage VRb on the resistor Rb (below),
the value of the voltage VRb is higher than before (for example, 6V in Figure 4 as compared to 1.4V in Figure 2), and the influence of the ripple on the capacitor Co decreases significantly across the resistor Rb.

The final signal across the resistor Rb can be filtered via the lowpass network Rf, Cf to be supplied as signal VIpk to the microcontroller 100 (comparator 14) .

The signal VIpk is proportional to the current in the switch (MOSFET) S1, and hence, when the peak reaches the reference obtained by the PI circuit 16 (for example, inside the microcontroller 100), the switch S1 is turned off (rendered non-conductive), and the switch S2 is turned on (rendered conductive).

If we now direct attention to the "OFF" interval, when the switch S1 is off (i.e., non-conductive), the current ILb that flows in the inductor or coil Lb sends the diode D in conduction (in practice, "recirculating" through the diode D) with an angular coefficient (slope) that depends upon the equivalent capacitance at the node N, mainly identified by the capacitances Cs and Cv, in combination with other parasitic capacitances.

The current continues to circulate in the diode D until the inductor or coil Lb is discharged.

Assuming, as it is reasonable to do, that the switch (MOSFET) S2 turns on (i.e., becomes conductive) without any dead time, when the inductor or coil Lb discharges, the diode D opens automatically (i.e., ceases to conduct), and the inductor or coil Lb starts to oscillate again together with the equivalent capacitance on the node N, where the signal VI coming from the components Cv, Rv has become "high" so that the microcontroller 100 is able to detect when the current is zero. The corresponding signal is clamped by the Zener diode Dz, with the oscillation of the signal denoted by Tv in Figure 2 at the bottom.

The switch S1 is again activated (rendered conductive) after a certain time set in the microcontroller 100 so that the switching can occur in "quasi resonant" mode, which is beneficial for reducing losses.

The reference value Ref used by the comparator 14 is given by the PI circuit 16, which, as has been seen, may be internal or external to the microcontroller 100. The current reference Iref can be set (according to criteria in themselves known) via a hardware (HW) interface or thanks to an external communication with the microcontroller 100.

The reference Iref is compared with the current Is of the load L (LED) obtained via the shunt resistor Rs coupled to the load: this current is in effect a DC current as a result of the filtering action performed by the output capacitance Co, which facilitates achievement of a good level of precision.

In brief:
the device 10 exemplified herein comprises an input node configured to receive an input signal (i.e., the voltage Vinput) and an output node OUT configured to have coupled thereto an electrical load L (for example, one or more LED lighting sources) with an inductance Lb (which includes its resistance RLb) set between the output node OUT and a driver node (the node N) ;
an electronic switch (for example, a MOSFET S1) is set between the input node Vinput and the driver node N so that the driver node N (to which the inductance Lb is coupled) is electrically coupled to the input node Vinput in response to the electronic switch S1 being conductive; likewise present is a diode D configured to facilitate a (recirculation) current flow between ground GND and the driver node N (for example, with the polarity exemplified herein, from ground GND to the driver node N);
current-detection circuitry is provided (the components Ra, Ca, Cb, Rb), which comprises the series connection of a first resistor Ra coupled to the driver node N and a first capacitor Ca coupled to the output node OUT, a second capacitor Cb having a first end coupled between the first resistor Ra and the first capacitor Ca and a second end coupled to a current-detection node P, with a second resistor Rb between the current-detection node P and ground GND; and
zeroing circuitry is likewise provided (for example, the electronic switch S2) acting between the current-detection node P and ground GND to force the current-detection node P to ground in response to the electronic switch S1 being non-conductive.

Figure 1 is an example of a solution in which the zeroing circuitry comprises a further electronic switch (the MOSFET S2) having a current flow path (between source and drain in the case of a field-effect transistor, such as a MOSFET), the electronic switch S2 being set between the current-detection node P and ground GND. As illustrated herein, this further electronic switch S2 has a control terminal (gate in the case of a field-effect transistor, such as a MOSFET) configured to render the further electronic switch S2 conductive on the basis of a signal (neg (Q)) that is asserted (input S of the flip-flop 12) in response to the fact that the end-of-current signal VI indicates the end of the current ILb through the inductance Lb, RLb, which can be put down to the electronic switch S1 being non-conductive.

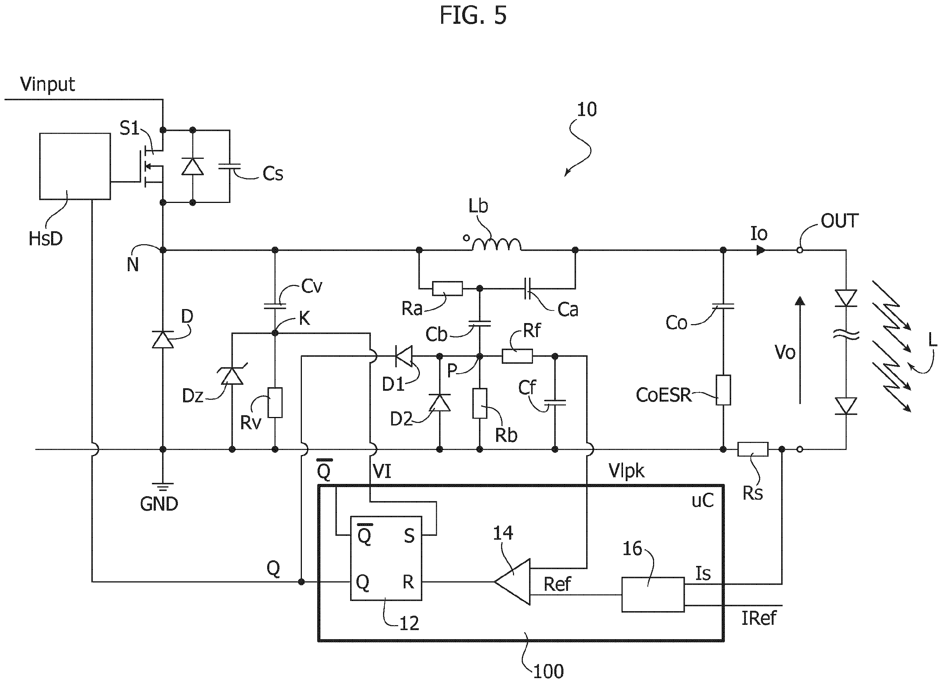

Figure 5 is a circuit diagram exemplifying a possible variant embodiment of a converter device 10 as described previously.

For brevity and simplicity of illustration, parts or elements already described in relation to the circuit diagram of Figure 1 are designated in Figure 5 by the same references. Consequently, such parts or elements will not be described again with reference to Figure 5 (it will be noted that, for simplicity, the resistance RLb is not visible in Figure 5).

Figure 5 is an example of the possibility of obtaining operating modes of the same type as those described previously with reference to Figures 2 to 4, without envisaging the use of a MOSFET to implement the switch designated by S2 in Figure 1.

In the diagram of Figure 5, the MOSFET S2 of Figure 1 is replaced by two diodes D1 and D2, which are connected as follows:
one (diode D1) with the anode connected to the node P between the capacitor Cb and the resistor Rb and the cathode connected to the output Q of the flip-flop 12 (hence at input to the driver HsD),
the other (diode D2) with the cathode connected to the node P between the capacitor Cb and the resistor Rb and the anode connected to ground GND.

The solution of Figure 5 takes into account the fact that the electronic switch S1 is configured to be rendered alternatively conductive or non-conductive by a driver HsD controlled via a control line that carries a signal (the signal Q of the flip-flop 12) generated in response to the flip-flop 12 being set when the end-of-current signal VI indicates an end of the current ILb through the inductance Lb, RLb.

In the solution of Figure 5, the zeroing circuitry hence comprises:
a diode (the diode D2) set between the current-detection node P and ground GND; and
a further diode (the diode D1) set between the current-detection node P and the aforesaid control line (output Q of the flip-flop 12) of the driver HsD of the electronic switch S1.

The solution of Figure 5 facilitates current control with a signal VI of a rather high level, whereas if the signal is comparable to the forward voltage of the diodes, it is possible to encounter phenomena of noise that are deleterious to stability.

This may occur when there is required a wide dimming range of the current so that the signal at full load is of a high level, whereas it may prove excessively low when the current is subjected to dimming by bringing it down to very low levels.

Characteristics common to both the solution exemplified in Figure 1 and the solution exemplified in Figure 5 are:
the presence of end-of-current detection circuitry (the elements Cv, Rv, Dz) set between the driver node N, with the inductance Lb (including the resistance RLb) coupled thereto, and ground GND, with said end-of-current detection circuitry configured to produce an end-of-current signal VI at an end-of-current node K; the end-of-current signal VI is indicative of the end of the current ILb through the inductance Lb, RLb between the driver node N and the output node OUT in response to the electronic switch S1 being non-conductive;
implementation of the end-of-current detection circuitry with: a detection capacitor Cv between the driver node N, having the inductance Lb (RLb) coupled thereto, and the end-of-current node K; a detection resistor Rv between the end-of-current node K and ground GND; and, optionally, a Zener diode Dz in parallel to the detection resistor Rv for clamping the voltage on the end-of-current node K;
the presence of the flip-flop 12 configured to control (via the signal neg(Q) - in Figure 1 - and via the signal Q - in Figure 5) the zeroing circuitry S2; D1, D2 by forcing to ground GND the current-detection node P as a function of the end-of-current signal VI, with the flip-flop 12 advantageously configured to be set (input S) and reset (input R) on the basis of: i) the end-of-current signal VI, and ii) the result of the comparison (implemented in the comparator 14) between a current-peak signal VIpk derived from the current-detection node P and a reference threshold Ref, it being optionally envisaged that the current-peak signal VIpk is obtained as lowpass-filtered replica (filtered by the RC filter comprising the resistor Rf and the capacitor Cf) of a current-peak signal detected at the current-detection node P; and
the presence of an amperometry element (the shunt resistor Rs, optionally referenced to ground GND) that issues a current-intensity signal Is indicative of the intensity of the current through the electrical load L (for example, LED sources), with a proportional-integral (PI) control 16, configured to produce the aforesaid reference threshold Ref on the basis of a current-reference signal IRef and of the aforesaid current-intensity signal Is.

It will again be noted that, albeit advantageous, implementation of the switch S1 (and/or of the switch S2) via field-effect transistors (MOSFETs) is not imperative. At least in principle, also possible is an implementation with bipolar-junction transistors (BJTs), where the control terminal is represented by the base (instead of by the gate), and the current path is represented by the current flow path between emitter and collector (instead of by the current flow path between source and drain).

Again, the foregoing description is illustrative of devices 10 in which it is assumed that Vinput is a voltage positive with respect to ground GND (with the driver HsD functioning as high-side driver). The solutions like the ones described herein may also be used in the case where Vinput is a voltage negative with respect to ground, with corresponding adaptations of the polarity/connection of the components, such as the diodes D, Dz, D1, or D2.

Of course, without prejudice to the underlying principles, the details and embodiments may vary with respect to what has been illustrated herein purely by way of example, without thereby departing from the sphere of protection as this is specified in the annexed claims.

### LIST OF REFERENCES

| | |
|---|---|
| Converter device | 10 |
| Switch (MOSFET) | S1 |
| MOSFET capacitance | Cs |
| Driver | HsD |
| Input voltage | Vinput |
| Node | N |
| Diode | D |
| Ground | GND |
| End-of-current detection capacitor | Cv |
| End-of-current detection node | K |
| End-of-current detection Zener diode | Dz |
| End-of-current detection resistor | Rv |
| Inductor (coil) | Lb |
| Coil series resistance | RLb |
| Resistor for transfer of current to ground | Rb |
| Capacitor for transfer of current to ground | Cb |
| Switch (MOSFET) | S2 |
| Node | P |
| Resistor and capacitor of lowpass RC filter | Rf, Cf |
| Output node | OUT |
| Output voltage and current | Vo, Io |
| Output capacitance | Co |
| Equivalent series resistance (ESR) | CoESR |
| Load (LED) | L |
| Shunt resistor | Rs |
| Microcontroller | 100 |
| Flip-flop | 12 |
| Comparator | 14 |
| PI circuit | 16 |
| Diodes | D1, D2 |
| ON time of switch S1 | ON |
| OFF time of switch S1 | OFF |
| Current through inductor (coil) | ILb |
| Current through switch S1 | IS1 |
| Voltage on node P | VRb |
| Voltage on node N | VS1 |
| "Downstream" voltage (set input of flip-flop) | VI |
| Voltage ripple on capacitor Co | VRCo |
| Voltage on capacitor Ca | VCa |
| Voltage on resistor Rb | VRb |

## Claims

1. A device (10) comprising:
an input node configured to receive an input signal (Vinput) and an output node (OUT) configured to have coupled thereto an electrical load (L);
an inductance (Lb, RLb) between the output node (OUT) and a driver node (N);
an electronic switch (S1) between the input node (Vinput) and the driver node (N), wherein the driver node (N) is electrically coupled to the input node (Vinput) in response to the electronic switch (S1) being conductive;
a current-recirculation diode (D) configured to facilitate current flow between ground (GND) and the driver node (N);
current-detection circuitry (Ra, Ca, Cb, Rb), comprising the series connection of a first resistor (Ra) coupled to the driver node (N) and a first capacitor (Ca) coupled to the output node (OUT), a second capacitor (Cb) having a first end coupled between the first resistor (Ra) and the first capacitor (Ca) and a second end coupled to a current-detection node (P), with a second resistor (Rb) between the current-detection node (P) and ground (GND); and
zeroing circuitry (S2; D1, D2) between the current-detection node (P) and ground (GND), the zeroing circuitry (S2; D1, D2) configured to force to ground the current-detection node (P) in response to the electronic switch (S1) being non-conductive.

2. The device (10) of claim 1, comprising end-of-current detection circuitry (Cv, Rv, Dz) arranged between the driver node (N) having said inductance (Lb, RLb) coupled thereto and ground (GND), wherein the end-of-current detection circuitry (Cv, Rv, Dz) is configured to produce an end-of-current signal (VI) at an end-of-current node (K), the end-of-current signal (VI) being indicative of an end of the current (ILb) through the inductance (Lb, RLb) between the driver node (N) and the output node (OUT) in response to the electronic switch (S1) being non-conductive.

3. The device (10) of claim 2, wherein the end-of-current detection circuitry (Cv, Rv, Dz) comprises:
a detection capacitor (Cv) between the driver node (N) having said inductance (Lb, RLb) coupled thereto and the end-of-current node (K),
a detection resistor (Rv) between the end-of-current node (K) and ground (GND), and, preferably,
a zener diode (Dz) in parallel to the detection resistor (Rv) to clamp the voltage at the end-of-current node (K).

4. The device (10) of any of the previous claims, wherein the zeroing circuitry comprises a further electronic switch (S2) having a current flow path therethrough arranged between the current detection node (P) and ground (GND).

5. The device (10) of claim 4 in combination with either one of claims 2 and 3, wherein the further electronic switch (S2) has a control terminal configured to render the further electronic switch (S2) conductive based on a signal (neg(Q)) asserted (S, 12) in response to the end-of-current signal (VI) indicating an end of the current (ILb) through the inductance (Lb, RLb) in response to the electronic switch (S1) being non-conductive.

6. The device (10) of any of claims 1 to 3, comprising:
a control signal generator (12) configured to generate a control signal on a control line (Q) in response to the end-of-current signal (VI) indicating an end of the current (ILb) through the inductance (Lb, RLb),
wherein:
the electronic switch (S1) is configured to be rendered alternatively conductive or non-conductive based on said control signal, and
the zeroing circuitry comprises a diode (D2) arranged between the current detection node (P) and ground (GND) and a further diode (D1) arranged between the current detection node (P) and said control line (Q) .

7. The device (10) of any of claims 3 to 6 in so far as dependent on claim 2, comprising a flip-flop circuit (12) configured to control (neg(Q); Q) the zeroing circuitry (S2; D1, D2) to force to ground (GND) the current detection node (P) as a function of said end-of-current signal (VI).

8. The device (10) of claim 7, wherein the flip-flop circuit (12) is configured to be set (S) and reset (R) based on said end-of-current signal (VI) and on the output of a comparator (14) configured to compare with a reference threshold (Ref) a current-peak signal (VIpk) derived from said current-detection node (P).

9. The device (10) of claim 8, wherein said current-peak signal (VIpk) comprises a lowpass-filtered (Rf, Cf) replica of a current-peak signal at said current-detection node (P).

10. The device (10) of claim 8 or claim 9, comprising:
an amperometry element (Rs) configured to provide a current-intensity signal (Is) indicative of the intensity of the current through said electrical load (L), the amperometry element (Rs) being preferably referred to ground (GND); and
a proportional-integral, PI, control (16) configured to produce said reference threshold (Ref) based on a current-reference signal (IRef) and said current-intensity signal (Is).

11. A method, comprising:
providing a device (10) according to any of the previous claims, wherein said device includes said input node, said output node (OUT), said inductance (Lb, RLb) between the output node (OUT) and a driver node (N) plus said electronic switch (S1) between the input node (Vinput) and the driver node (N), said current-recirculation diode (D), said current-detection circuitry (Ra, Ca, Cb, Rb), and said zeroing circuitry (S2; D1, D2);
receiving an input signal (Vinput) at said input node;
coupling an electrical load (L) to said output node (OUT) with said inductance (Lb, RLb) arranged between the output node (OUT) and the driver node (N);
electrically coupling the driver node (N) to the input node (Vinput) in response to said electronic switch (S1) being conductive;
facilitating current flow between ground (GND) and the driver node (N) via said current-recirculation diode (D);
detecting the current flowing through the output node (OUT) via said current-detection circuitry (Ra, Ca, Cb, Rb); and
forcing to ground the current-detection node (P) in response to the electronic switch (S1) being non-conductive via the zeroing circuitry (S2; D1, D2) between the current-detection node (P) and ground (GND).
